# FASCICULE DE BREVET EUROPEEN

(11) **EP 1 937 462 B1**
(45) Date de publication et mention de la délivrance du brevet: **19.07.2017**
(21) Numéro de dépôt: 06807345.1
(22) Date de dépôt: 17.10.2006
(51) Int. Cl.: B22F 3/03, B22F 3/00, B30B 15/30

(54) **DISTRIBUTEUR DE POUDRE, NOTAMMENT POUR PASTILLEUSE ET PROCEDE DE FABRICATION DE PASTILLES DE COMBUSTIBLE NUCLEAIRE**
PULVERSPENDER, INSBESONDERE FÜR PELLETPRESSE UND VERFAHREN ZUR HERSTELLUNG VON KERNBRENNSTOFFTABLETTEN
POWDER DISPENSER, PARTICULARLY FOR A PELLETING PRESS AND METHOD FOR PRODUCING NUCLEAR FUEL PELLETS

(30) Priorité: 19.10.2005 FR 0553175
(43) Date de publication de la demande: 02.07.2008
(73) Titulaire: Areva NC, 75009 Paris (FR)
(72) Inventeur: ENGELVIN, Pascal, 78000 Versailles (FR); PAGES, Jean-Pierre, 30210 Sernhac (FR); PANDRAUD, Jean-Luc, 30330 Cavillargues (FR); LAVOINE, Rémy, 30580 Lussan (FR)
(74) Mandataire: Ahner, Philippe
(86) Numéro de dépôt international: PCT/EP2006/067499
(87) Numéro de publication internationale: WO 2007/045651

(56) Documents cités:
- EP-A2- 1 052 086
- GB-A- 913 387
- US-A- 3 726 622
- US-A- 5 352 112

## Description

### DOMAINE TECHNIQUE ET ART ANTÉRIEUR

La présente invention se rapporte à un distributeur de poudre, notamment utilisé pour alimenter un dispositif de fabrication de pastilles de combustible nucléaire, par exemple de type MOX (mélange d'oxyde de plutonium et d'oxyde d'uranium), et un procédé de fabrication desdites pastilles utilisant un tel distributeur.

La fabrication de pastilles de combustible nucléaire comporte les étapes suivantes :
- remplissage d'un moule ou matrice ayant la forme d'une pastille, à l'aide d'un distributeur,
- déplacement du distributeur de manière à libérer le moule ainsi rempli, puis
- pressage par l'intermédiaire d'un premier et d'un deuxième poinçons pénétrant dans le moule,
- évacuation des pastilles.

L'étape la plus longue dans ce procédé de fabrication est celle du remplissage de la matrice. Ainsi, lorsqu'on cherche à réduire le temps de cycle de fabrication de pastilles, on cherche à réduire le temps nécessaire au remplissage de la matrice.

Il est connu, comme distributeur de poudre ou sabot, un boîtier comportant quatre parois latérales et une paroi supérieure sur laquelle est branché un tuyau d'alimentation en poudre, ledit boîtier étant apte à se déplacer sur une table dans laquelle sont pratiquées les orifices formant moule de pressage des pastilles. Le document US 3 726 622 décrit un dispositif de fabrication de pastilles selon le préambule de la revendication 1. Cependant, l'utilisation de la poudre de MOX pose un problème particulier du fait de la finesse des particules de MOX. En effet, la poudre de MOX présente une mauvaise coulabilité, c'est-à-dire une mauvaise aptitude à l'écoulement continu. Les particules ont tendance alors à former des amas et à former des ponts de poudre qui bloquent l'écoulement de la poudre et donc sa distribution dans les matrices.

Il apparaît alors une distribution non homogène de la poudre dans la matrice. Ceci a pour conséquence la fabrication de pastilles n'ayant pas la masse recherchée et/ou ayant des densités trop dispersées.

Les caractéristiques des pastilles doivent être maîtrisées de manière à assurer une sécurité maximale de fonctionnement lorsque les assemblages de combustible nucléaire comportant lesdites pastilles, sont utilisés dans les réacteurs nucléaires.

En outre, l'adhésion de la poudre aux parois du sabot provoque un allongement du temps de cycle.

C'est par conséquent un but de la présente invention d'offrir un distributeur de poudre assurant une fabrication de pastilles ayant des caractéristiques homogènes.

C'est également un but de la présente invention d'offrir un distributeur permettant de réduire le temps de cycle de fabrication des pastilles de combustible nucléaire.

### EXPOSÉ DE L'INVENTION

Les buts précédemment énoncés sont atteints par un dispositif selon la revendication 1 et un procédé selon la revendication 16. En d'autres termes, le distributeur selon la présente invention comporte une surface de déplacement augmentée par rapport aux distributeurs antérieurs pour augmenter les sollicitations appliquées à la poudre.

La présente invention a alors principalement pour objet un distributeur de poudre comportant un boîtier comportant sur une paroi supérieure des moyens de raccord à au moins un tuyau d'alimentation en poudre raccordé à une trémie, ledit distributeur étant apte à solliciter la poudre dans un mouvement de va et vient sur un plan le long d'une direction de déplacement déterminée, et des moyens pour regrouper la poudre le long d'axes distincts sensiblement parallèles à la direction de déplacement, pour remplir des matrices de pressage de pastilles, chaque matrice étant disposée sur un axe de regroupement distinct, les moyens de regroupement étant portés par des parois du boîtier perpendiculaires à la direction de déplacement et ayant une section en dent de scie selon un plan parallèle au plan de déplacement.

Dans un exemple avantageux, le distributeur comporte des moyens de regroupement aval et des moyens de regroupement amont selon la direction de déplacement.

Les moyens de regroupement aval sont avantageusement décalés transversalement par rapport aux moyens de regroupement amont d'une demi largeur de dent, de manière à ce qu'une pointe de dent soit en regard d'un fond entre deux dents consécutives.

Le distributeur selon la présente invention comporte avantageusement des moyens de guidage longitudinaux aptes à coopérer avec des moyens de guidage portés par le plan de déplacement.

Ces moyens de guidage du distributeur et ceux du plan peuvent former une glissière, les moyens de guidage pouvant alors comporter une saillie axiale de chaque côté transversal du boîtier, apte à glisser dans une rainure axiale fixe par rapport au plan.

De manière avantageuse, la saillie axiale est orientée vers le boîtier et au moins une des saillies est amovible.

Selon la présente invention, le distributeur est avantageusement raccordé à des moyens de déplacement selon un mouvement de va et vient le long de la direction de déplacement par l'intermédiaire de deux bras fixes en rotation par une première extrémité respectivement sur chacune des faces latérales du boîtier, et mobiles en rotation par une deuxième extrémité opposée à la première extrémité, lesdits bras comportant chacun un vérin.

Dans un exemple de réalisation, les moyens de regroupement sont portés, respectivement, par une plaque mobile par rapport au boîtier.

De manière avantageuse, le distributeur, comporte des moyens aptes à faire vibrer lesdites plaques par rapport aux matrices le long de la direction de déplacement. Ces moyens d'excitation peuvent comporter, par exemple, un pot vibrant ou être du type piézoélectrique.

Ces moyens de vibration peuvent comporter un arbre solidaire par une extrémité à une plaque et par une deuxième extrémité à un moyen d'actionnement selon un mouvement de va et vient le long de la direction de déplacement, et des moyens de suspension.

Les moyens de suspension peuvent, par exemple, comporter un ressort en réaction sur l'arbre et le boîtier.

Le distributeur peut, en outre, comporter un moyen d'étanchéité interposé entre les plaques et la paroi du boîtier en regard, par exemple un anneau en élastomère d'axe sensiblement confondu avec celui du bras.

Les moyens de suspension peuvent également être un anneau en élastomère interposé entre la plaque et la paroi du boîtier en regard et forment également le moyen d'étanchéité.

L'anneau en élastomère peut être collé sur le boîtier et la plaque, ou solidarisé au boîtier et à la plaque par vulcanisation. L'anneau peut également être emmanché en force sur un premier anneau en saillie du boîtier et sur un deuxième anneau en saillie de la plaque.

Dans un exemple particulier, l'anneau est maintenu entre deux plaques de tôle de manière à former une plaque sandwich.

Les tôles peuvent comporter des fenêtres en regard du passage de l'anneau et dans lequel la fenêtre de la tôle côté boîtier est plus petite que celle côté plaque.

Par exemple, la tôle en contact de la plaque est soudée et/ou rivetée sur celle-ci et comporte des extrémités repliées à angle droit.

Le distributeur comporte, avantageusement, une face formant poussoir ayant une forme de nez glissant sur le plan de glissement destinée à pousser les pastilles après leur formation.

La présente invention a également pour objet un dispositif de fabrication de pastilles comportant une table comprenant des matrices, des poinçons supérieurs et inférieurs destinés à presser la poudre dans les matrices, un distributeur tel que décrit précédemment, des moyens de commande du déplacement du distributeur selon un mouvement de va et vient le long de la première direction de déplacement, des moyens d'acheminement de la poudre dans le distributeur, les matrices étant disposées selon au moins une rangée, la distance séparant les matrices étant égale à la distance séparant les fonds des dents, le distributeur étant disposé sur les matrices de manière à ce que, lors de son déplacement, chaque fond entre deux dents recouvre une matrice.

La rangée est avantageusement perpendiculaire à la direction de déplacement.

Avantageusement, le dispositif, comporte deux rangées de matrices parallèles, les matrices de chaque rangée étant à équidistance les unes des autres, et les matrices de la première rangée étant décalées par rapport aux matrices de la deuxième rangée d'une demi-distance séparant les matrices de la deuxième rangée

Par exemple, chaque rangée comporte sept matrices.

Les moyens d'acheminement comportent au moins un tuyau d'alimentation raccordant une trémie au distributeur.

Le tuyau d'alimentation peut s'étendre dans la direction des rangées de matrices.

Le dispositif selon la présente invention, peut comporter un moyen de collecte du contenu du distributeur après un cycle de remplissage des matrices.

Ce moyen de collecte peut également comporter au moins un orifice pratiqué dans la table raccordé par un tuyau à des moyens d'aspiration, l'orifice se trouvant sous le distributeur lorsque celui-ci est dans une position particulière de vidange.

En outre, ce dispositif peut comporter avantageusement des moyens pour mettre la poudre collectée par les moyens de collecte dans la trémie.

De manière avantageuse, la table est mobile selon un axe perpendiculaire à sa face plane.

Le dispositif comporte également des rails dans lesquels pénètrent les saillies axiales du distributeur selon un exemple particulier.

La présente invention a également pour objet un procédé de fabrication de pastilles comportant les étapes suivantes :
- remplissage de matrices avec la poudre au moyen d'un distributeur de poudre muni de moyens de regroupement le long de directions axiales distinctes correspondant à la disposition des matrices,
- pressage de la poudre dans les matrices,
- évacuation des pastilles.

Dans un exemple particulier, le sabot peut avoir un mouvement de va et vient suivant une loi sinusoïdale pendant l'étape de remplissage.

Dans un autre exemple particulier, le sabot a un mouvement de va et vient suivant une loi triangulaire pendant l'étape de remplissage.

En outre, les moyens de regroupement peuvent être mis en vibration.

De plus, l'évacuation de pastilles s'effectue avantageusement par abaissement de la matrice et par poussée des pastilles par le distributeur.

Le procédé peut également comporter une étape supplémentaire de vidange du distributeur.

### BRÈVE DESCRIPTION DES DESSINS

La présente invention sera mieux comprise à l'aide de la description qui va suivre et des dessins en annexe sur lesquels :
- la figure 1 est une représentation schématique d'un dispositif de fabrication de pastilles de combustible nucléaire,
- la figure 2 est une vue en coupe partielle d'un distributeur selon la présente invention,
- la figure 3 est une vue en coupe selon un plan vertical A-A du distributeur de la figure 2,
- la figure 4 est une vue en coupe partielle selon un plan vertical B-B de la figure 3,
- la figure 5 est une vue en coupe d'un détail de la figure 2 selon un plan D-D,
- la figure 6 représente les différentes positions du distributeur lors de la fabrication de pastilles,
- les figures 7, 8, 9A et 9B sont des représentations schématiques de variantes de réalisation d'un distributeur selon la présente invention.

### EXPOSÉ DÉTAILLÉ DE MODES DE RÉALISATION PARTICULIERS

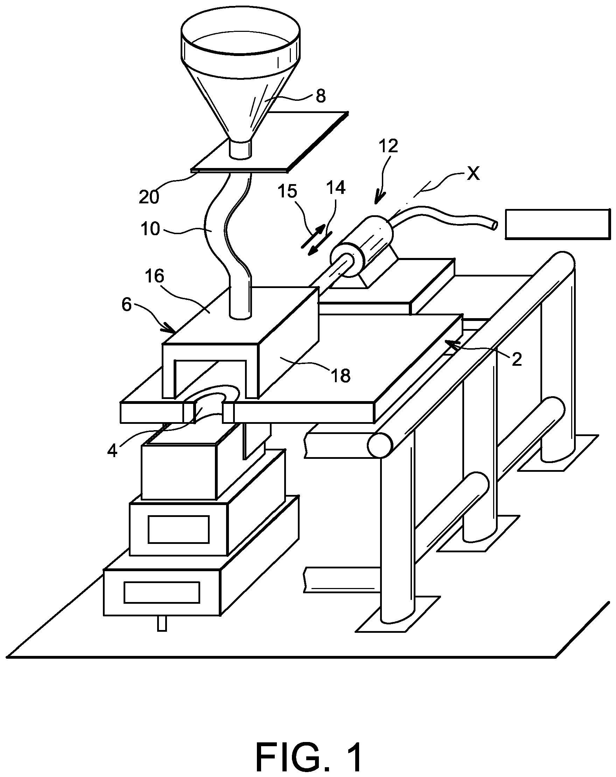

Sur la figure 1, on peut voir un dispositif de fabrication de pastilles comportant une table 2, munie d'au moins une matrice 4 munie d'un orifice dans lequel sera disposée la poudre à presser, un sabot ou distributeur 6 de poudre destiné à se déplacer au-dessus de la matrice 4, une trémie d'alimentation 8 raccordée au sabot par l'intermédiaire d'un tuyau 10 et un moyen 12 de déplacement du sabot 6 selon un axe X, ce moyen 12 appliquant avantageusement un mouvement de va et vient selon les flèches 14 et 15.

Le sabot 6 est formé par un boîtier comportant une paroi supérieure 16 et des parois latérales 18, le tuyau 10 étant branché sur la surface supérieure 16.

Le dispositif comporte également une vanne 20 interposée entre la trémie et le tuyau d'alimentation 10 de manière à réguler l'alimentation du sabot en poudre.

Lorsque la vanne 20 est ouverte, la poudre contenue dans la trémie 8 s'écoule dans le tuyau 10 pour arriver dans le sabot 6. Le sabot 6, sous l'action du moyen 12 de déplacement, va avoir un mouvement longitudinal le long de l'axe X de va et vient selon les flèches 14 et 15 et va distribuer la poudre dans la matrice 4. Dans l'exemple représenté, une seule matrice est visible, mais on peut prévoir plusieurs matrices.

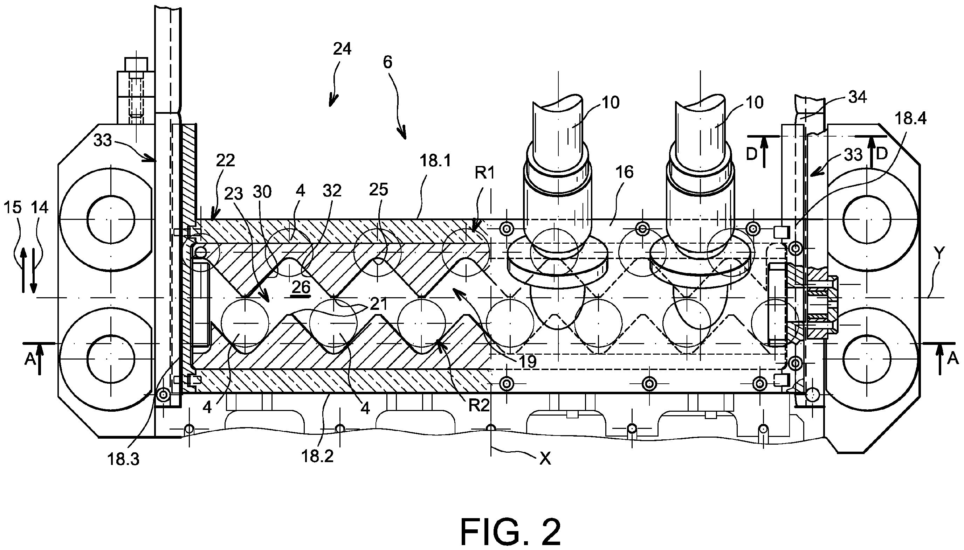

Sur la figure 2, on peut voir une représentation détaillée d'un sabot selon la présente invention, comportant un boîtier 22 de forme sensiblement rectangulaire, formé par les parois latérales 18 et la paroi supérieure 16. Les parois latérales comportent des parois 18.1 et 18.2 perpendiculaires à l'axe X, la paroi 18.2 dite paroi avant précédant la paroi arrière 18.1 dans le sens indiqué par la flèche 14. Des parois 18.3,18.4 parallèles à la direction X, raccordent ensemble les extrémités des parois avant et arrière respectivement.

Le sabot 6 est apte à coulisser sur la table 2 selon l'axe X, entre une position reculée extrême dans laquelle le sabot ne recouvre pas les matrices 4, et une position extrême avancée (position D), permettant l'évacuation de pastilles.

La table 2 comporte, dans l'exemple représenté, quatorze matrices ou moules disposées en une première R1 et une deuxième R2 rangées sensiblement parallèles à l'axe Y.

Dans l'exemple représenté, les rangées sont décalées l'une par rapport à l'autre de manière à ce que les matrices ne soient pas alignées selon des axes parallèles à l'axe X. Ainsi, en regardant selon la flèche 14, les orifices des matrices de la première rangée se trouvent entre deux orifices de matrices de la deuxième rangée sauf pour les orifices à l'extrême gauche de R1 et à l'extrême droite de R2 (figure 2).

On peut également prévoir plus ou moins de quatorze matrices et plus de deux rangées en fonction des débits souhaités et des tailles de pastilles.

Selon la présente invention, le sabot 6 comporte des plaques intérieures 19, 23 munies de moyens pour regrouper la poudre le long de chemins distincts, de manière à déplacer et à solliciter la poudre en direction de chaque matrice par une surface de sabot importante. Ceci permet de réduire l'adhésion de la poudre et son adhérence aux parois. Ces moyens sont formés par des cavités délimitées par des surfaces 30,32 inclinées par rapport à l'axe X.

Dans l'exemple représenté, les plaques intérieures sont de géométrie sensiblement identique, nous décrirons la paroi 19.

La plaque 19 a une section selon un plan parallèle au plan de la table 2 en dents de scie, les dents comportant des pointes 21 reliées par des fonds 25.

L'extrémité des dents de scie peut être plus ou moins arrondie

La plaque 19 est disposée par rapport à la table de manière à ce que les matrices se trouvent alignées avec les fonds 25 entre les dents en regardant selon la flèche 14.

Les fonds 25 sont avantageusement délimités par un arc de cercle, évitant une rétention de poudre.

De manière avantageuse, la plaque 23 a les mêmes dimensions que la plaque 19.

La plaque 23 est en regard de la plaque 19. Avantageusement, les dents de la plaque 23 sont décalées selon l'axe Y par rapport aux dents de la plaque 19. Avantageusement, le décalage est d'une demi largeur de dent.

Dans l'exemple représenté, le profil de la plaque 19 et de la plaque 23 sont complémentaires.

De manière avantageuse, les plaques 19,23 sont amovibles et fixées à l'intérieur du boîtier. Ainsi, leur remplacement ne nécessite pas un remplacement du sabot en entier. A cet effet, la paroi supérieure du boîtier est également amovible.

On pourrait également prévoir que les moyens de regroupement 19,23 soient formés directement dans les faces intérieures des parois latérales du boîtier.

Le boîtier est par exemple réalisé en CuZn et les moyens de regroupement, par exemple en polymère.

Les tubes d'alimentation 10 débouchent dans la paroi supérieure du boîtier sensiblement entre les contours des plaques 19,23. Dans l'exemple représenté, le sabot est alimenté par quatre tuyaux d'alimentation 10 répartis régulièrement selon un axe Y perpendiculaire à l'axe X.

On pourrait prévoir plus ou moins de tuyaux d'alimentation. On pourrait, par exemple, prévoir six tuyaux débouchant au droit des six fonds 25 de la paroi 19 ou 23, ou douze tuyaux débouchant au droit de chaque fond 25.

Dans l'exemple représenté, quatre tuyaux flexibles séparés sont utilisés. Mais l'on peut prévoir d'utiliser un seul tuyau d'alimentation 10 de forme allongée et s'étendant selon l'axe Y tout le long de la surface supérieure du boîtier permettant ainsi une alimentation en continu tout le long du chemin délimité par les dents de scie.

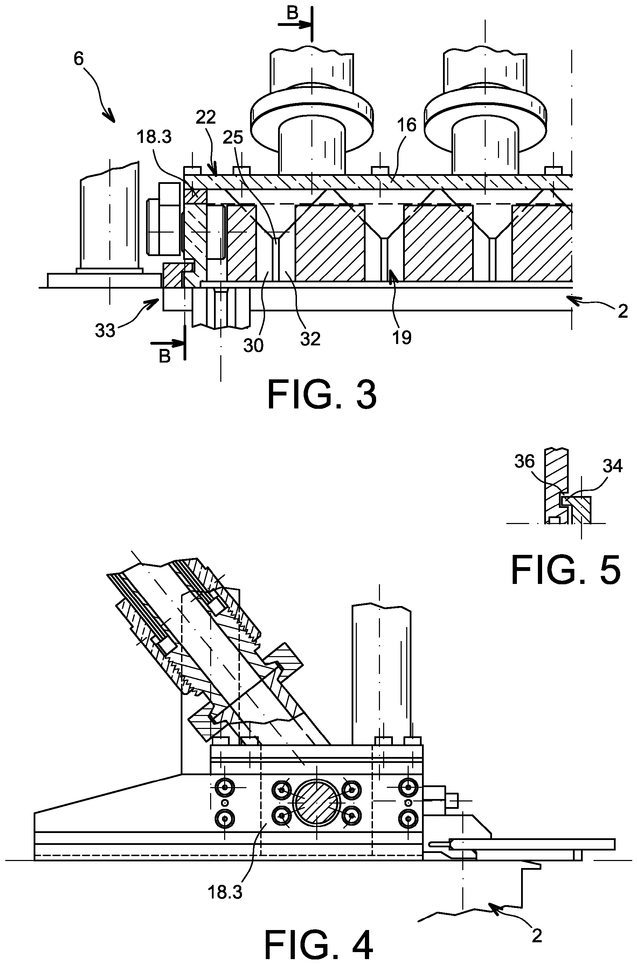

Le dispositif selon la présente invention comporte également des moyens de guidage 33 longitudinaux permettant un déplacement précis du sabot selon la direction X par rapport à la table 2. Les moyens 33 comportent une saillie axiale 34 portée par le sabot coopérant avec une rainure longitudinale 36 portée par la table 2, visibles sur la figure 5.

Sur la figure 5, on peut voir le détail de la saillie axiale 34 et de la rainure 36. De manière avantageuse, la saillie axiale 34 est orientée vers le boîtier et pénètre dans la rainure 36 ou rail interposée entre cette saillie 34 et une paroi 18.3,18.4 du boîtier. Pour le montage du sabot sur la table, il est prévu qu'au moins une des saillies axiales 34 fixées de part et d'autre sur les parois latérales 18.3,18.4 du boîtier soit amovible, tel qu'on peut le voir sur la figure 2.

On pourrait prévoir que la rainure 36 soit portée par le sabot et la saillie 34 soit portée par la table.

Le sabot est maintenu en contact de la table, et en particulier des matrices, avantageusement par des moyens mécaniques, tels qu'un ressort. Mais on peut prévoir d'utiliser des moyens pneumatiques, par exemple un vérin pneumatique

De manière avantageuse également, la trémie est alimentée, par exemple par un système d'aspiration par pompe à vide, ou mécanique du type couloir vibrant et vis sans fin.

L'utilisation d'un sabot selon la présente invention permet de limiter la rétention de la poudre à l'intérieur du sabot et les risques de tassement de la poudre. On obtient alors un remplissage efficace des première et deuxième rangées avec des débits augmentés.

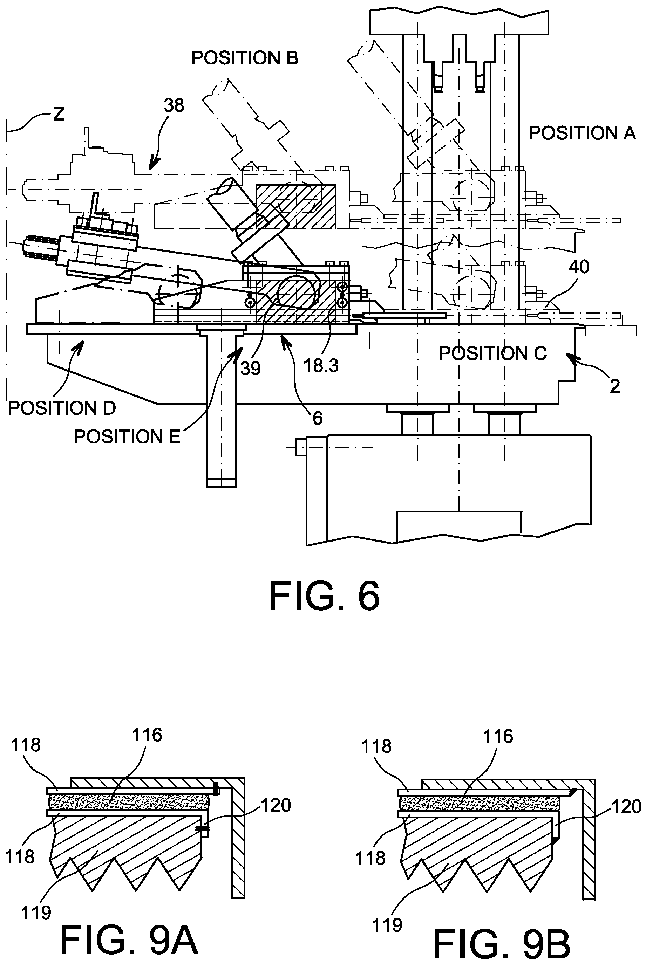

Le sabot, lors du remplissage, se déplace selon un mouvement de va et vient, selon les flèches 14 et 15, le long de l'axe X. En référence à la figure 6, ce mouvement est obtenu, par exemple, au moyen de deux vérins 38 montés chacun par une extrémité 39, à rotation sur les parois latérales 18.3,18.4 du boîtier du sabot et montés également de manière mobile en rotation par une deuxième extrémité opposée à la première extrémité, sur un dispositif d'actionnement (non représentés).

De manière avantageuse la table est montée mobile selon un axe vertical Z, orthogonal à la direction X et à la direction Y. Du fait du montage en rotation du vérin par ces deux extrémités, à la fois sur le sabot et sur le dispositif d'actionnement, le sabot suit entièrement le déplacement de la table.

Le mouvement de va et vient du sabot est avantageusement du type sinusoïdal ou triangulaire.

En utilisant un mode de déplacement de type sinusoïdal, il est possible d'atteindre un débit de l'ordre de 9 grammes de poudre par seconde et l'utilisation d'une loi triangulaire pour le déplacement du sabot permet d'atteindre des débits de l'ordre de 8 grammes par seconde.

Le sabot comporte également à une extrémité longitudinale un nez 40, destiné à pousser les pastilles après pressage en direction d'un convoyeur (non représenté).

Sur un modèle de presse, on définit un axe de secouage et une amplitude de secouage de part et d'autres de cet axe. L'axe de secouage correspond à l'axe central entre les deux rangées de matrices et l'amplitude de secouage assure le recouvrement des matrices par la poudre du sabot. Il est possible en modulant la position de l'axe de secouage, c'est-à-dire en rendant sa position asymétrique relativement au deux rangées de matrices, d'ajuster une éventuelle dissymétrie de remplissage entre la rangée avant et la rangée arrière.

Nous allons détailler le remplissage des matrices de la première rangée R1, le remplissage des matrices de la deuxième rangée R2 s'effectuant de manière symétrique.

Lorsque les moyens 19 se déplacent dans le sens 15, le profil en dents de scie des moyens de regroupement 19 rassemble la poudre entre chaque paire de dents, la poudre se déplace le long des dents vers les fonds 25. Les fonds 25 étant alignés avec les matrices 4 de la première rangée R1, et disposés en arrière de la première rangée R1 avant le remplissage, ceux-ci rencontrent les matrices 4 de la rangée R1, la poudre rassemblée dans les fonds 25 se trouve à un certain moment au droit des matrices 4 de la rangée R1 et tombe dans celles-ci. Le remplissage des matrices se fait d'autant mieux que la poudre est sollicitée de manière importante par les moyens 19 offrant une grande surface pour déplacer la poudre.

Le même phénomène a lieu pour la deuxième rangée R2, lorsque le moyen 23 se déplace dans le sens 15.

Toute la poudre nécessaire à la réalisation d'une pastille ne tombe pas en une seule fois dans chaque matrice, mais le remplissage s'effectue en plusieurs passes grâce au déplacement de va et vient du sabot. Ce remplissage en plusieurs étapes permet d'obtenir une bonne homogénéité de remplissage.

En outre, le mouvement conjugué de va et vient du sabot et de montée de la table crée un phénomène d'aspiration de la poudre vers l'intérieur des matrices. Le poinçon inférieur étant fixe, une montée de la table engendre une augmentation du volume libre des matrices provoquant une aspiration de la poudre.

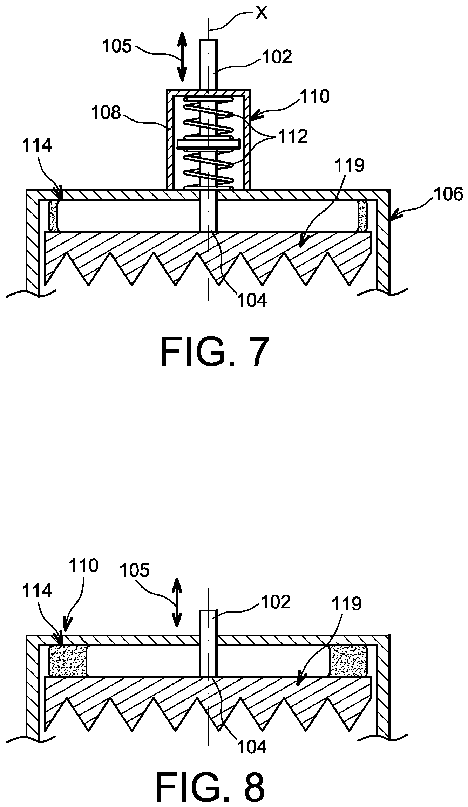

Sur les figures 7 à 9, on peut voir une variante de réalisation d'un distributeur selon la présente invention comportant un sabot 106 qui se distingue du sabot 6 des figures 2 à 6, en ce que les moyens de regroupement sont mobiles par rapport au boîtier.

Le distributeur selon la figure 7 comporte une plaque 119 portant des moyens de regroupement selon la présente invention, la plaque 119 étant fixée à une première extrémité 104 d'un bras 102 apte à être déplacé selon la direction X dans un mouvement de va et vient selon la flèche 105.

Le bras est fixé par une deuxième extrémité à un dispositif excitateur (non représenté) apte à appliquer des déplacements de faible amplitude au bras de manière à mettre les moyens de regroupement 119 en vibration selon la direction X.

Sous l'action du bras, les moyens de regroupement se déplacent selon la direction X à l'intérieur du boîtier.

Le distributeur comporte également des moyens de suspension 110 formés, dans l'exemple représenté, par deux ressorts hélicoïdaux 112 en série montés en réaction entre le bras 102 et une cage 108 fixe par rapport au boîtier.

Les moyens de suspension permettent de faire vibrer la poudre dans les basses fréquences et avec une amplitude élevée, ce qui provoque une répartition homogène de la poudre sur toute la surface du sabot. Ces mouvements peuvent être combinés ou enchaînés avec des vibrations de plus faible amplitude et/ou avec une fréquence plus faible, visant à « décohésionner » la poudre, pour la fluidifier et remplir convenablement les matrices.

Le distributeur comporte également un moyen d'étanchéité 114 entre le boîtier et les moyens de regroupement pour éviter que de la poudre ne se place entre les parois du boîtier et les plaques de regroupement. Ces moyens d'étanchéité comportent, dans l'exemple représenté, un anneau en élastomère, sensiblement coaxial au bras 102.

Dans l'exemple représenté en figure 8, l'anneau 114 forme à la fois les moyens d'étanchéité et les moyens de suspension 110, les dimensions de l'anneau étant déterminées pour remplir ces deux fonctions.

Avantageusement, le matériau élastomère utilisé est résistant à des températures comprises sensiblement entre 50°C et 130°C et aux radiations.

L'anneau est par exemple réalisé par découpage dans une plaque d'élastomère.

L'anneau est fixé au boîtier et aux moyens de regroupement par exemple par collage ou par vulcanisation.

L'anneau peut également être emmanché en force sur des pièces en saillie du boîtier et des moyens de regroupement, par exemple des anneaux de diamètre extérieur supérieur à celui du diamètre intérieur de l'anneau en élastomère.

Il est également envisageable (figures 9A et 9B) de réaliser les moyens de suspension en forme d'anneau découpé dans une plaque en matériau sandwich, comportant une couche d'élastomère 116 enserrée entre deux plaques de tôle 118.

Les tôles de ces moyens de suspension peuvent être soudées (figure 9B) et/ou rivetées (figure 9A) sur le boîtier et les plaques 119.

Sur les figures 7, 8, 9A et 9B, n'est représentée qu'une plaque munie de moyens de regroupement, mais un dispositif muni de deux plaques vibrantes en regard comme dans le distributeur de la figure 2, ne sort pas du cadre de la présente invention.

On peut prévoir un excitateur pour chaque plaque ou un seul excitateur pour les deux plaques, les plaques étant par exemple raccordées rigidement.

De manière avantageuse (cf. figures 9A et 9B), la tôle en contact des moyens de regroupement comporte des extrémités 120 repliées à angle droit pour suivre les contours latéraux des moyens de regroupement, et une couche en élastomère débordant de la face arrière des moyens de regroupement. De cette manière, les moyens de suspension 110 empêchent également toute intrusion de poudre entre les moyens de regroupement et le boîtier.

Dans un mode de réalisation, le secouage de la poudre est uniquement provoqué par la vibration des moyens de regroupement, le sabot n'effectuant plus de mouvement de va et vient pour secouer la poudre.

D'une part, ceci permet de réduire les sollicitations des bras munis de vérins décrits précédemment, ceux-ci servant alors uniquement aux déplacements de forte amplitude pour la mise en place du sabot dans les positions A à D représentées sur la figure 6, par exemple permettre le retrait du sabot pour le pressage.

D'autre part, il y a également une réduction du temps du cycle de fabrication des pastilles, puisque la poudre est directement sollicitée.

En outre, le sabot restant en permanence au dessus des deux rangées de matrices, le temps de remplissage des matrices est plus court que dans le système où le sabot fait des allers et retours entre les matrices amont et aval.

Un distributeur prévoyant un secouage de la poudre à la fois par un mouvement de va et vient du sabot et une mise en vibration des moyens de regroupement ne sort pas du cadre de la présente invention.

De manière avantageuse, l'excitateur est prévu à l'extérieur du sabot facilitant la maintenance. En outre, cette disposition externe permet d'éviter les risques de panne par manque de ventilation.

Les moyens de regroupement aptes à vibrer sont, de préférence, localisés au plus près des matrices afin de « décohésionner » la poudre là où elle doit s'évacuer.

L'excitateur comporte, par exemple, un dispositif d'excitation électromagnétique, par exemple un pot vibrant ou est du type excitateur piézoélectrique.

L'utilisation de pots vibrants présente l'avantage de permettre de larges plages de fréquence et d'amplitude.

Tout type d'excitateur, par exemple de type magnétique peut convenir.

Le dispositif de fabrication de pastilles comporte, comme décrit précédemment, des moyens de commande du déplacement du sabot et également de commande de l'excitateur selon des cycles déterminés de manière à assurer une « répétabilité » du remplissage des matrices. Il peut être prévu des vibrations de forte amplitude en début de cycle puis des vibrations de plus faible amplitude et/ou des vibrations de fréquence variable.

Un procédé de fabrication de pastilles mettant en oeuvre le distributeur selon la présente invention va maintenant être décrit en relation avec les positions A à E du sabot représentées sur la figure 6.

Selon la présente invention, le procédé de fabrication comporte les étapes suivantes :
a) mise en place du sabot sur les matrices (position A), le sabot comportant des moyens de regroupement de la poudre selon des axes distincts,
b) remplissage des matrices par secouage des moyens de regroupement,
c) retrait du sabot (position B),
d) compression de la poudre,
e) évacuation des pastilles (position C).

Lors de l'étape b), la vanne 20 est ouverte permettant à la poudre contenue dans la trémie de s'écouler dans le boîtier du sabot par les tuyaux 10.

Puis le boîtier du sabot effectue des mouvements de va et vient (par exemple sept ou huit allers et retours) et/ou les moyens de regroupement sont mis en vibration permettant une répartition uniforme de la poudre et évitent la cohésion des particules de poudre. Lors de ce remplissage, le poinçon inférieur peut être déplacé de manière à provoquer un effet d'aspiration.

Lors de l'étape c), le sabot a un déplacement, sur la table 2 vers l'arrière, de grande amplitude, relativement aux mouvements de va et vient lors du secouage, de manière à libérer complètement les matrices pour l'approche du poinçon supérieur.

Lors de l'étape d), la poudre est pressée entre le poinçon supérieur et le poinçon inférieur pendant un temps déterminé. On peut prévoir une variation de la vitesse de déplacement du poinçon supérieur lors du pressage.

Lors de l'étape e), la table descend provoquant une éjection des pastilles des matrices, puis le sabot effectue un mouvement de grande amplitude vers l'avant pour pousser les pastilles vers un convoyeur disposé à l'extrémité avant de la table.

Le procédé peut comporter une étape supplémentaire de vidange du sabot, celui-ci est alors placé dans une position de vidange (position D), au dessus d'orifices raccordés à des moyens d'aspiration de la poudre restant dans le sabot.

Puis en fin de cycle, le sabot est placé en position de repos (position E) en attente.

Pour les positions C à E, la table se trouve en position basse.

Grâce au sabot selon la présente invention, il est possible de gagner plusieurs secondes sur le temps de remplissage des matrices.

## Revendications

1. Dispositif de fabrication de pastilles comportant une table (2) munie d'une pluralité de matrices (4) de pressage sensiblement aux dimensions des pastilles à fabriquer, les matrices (4) étant disposées selon au moins une rangée (R1,R2), des poinçons inférieurs destinés à presser la poudre dans les matrices, un distributeur de poudre comportant un boîtier muni sur une paroi supérieure (16) de moyens de raccord à au moins un tuyau d'alimentation (10) en poudre raccordé à une trémie, ledit tuyau formant des moyens d'acheminement de la poudre dans le distributeur, des moyens de déplacement du distributeur sur la table **caractérisé en ce qu'**il comporte également des poinçons supérieurs destinés à presser la poudre dans les matrices, **en ce que** le moyens de déplacement du distributeur sur la table appliquent un mouvement de va et vient au distributeur le long d'une première direction de déplacement (X), **en ce que** ledit distributeur est apte à solliciter la poudre dans un mouvement de va et vient sur un plan de la table le long de la direction de déplacement déterminée (X), et **en ce que** ledit dispositif comporte également des moyens (19,23,119) de regroupement pour regrouper la poudre le long d'axes distincts sensiblement parallèles à la direction de déplacement (X), pour remplir la pluralité de matrices de pressage (4) de pastilles simultanément, chaque matrice étant disposée sur un axe de regroupement, les moyens de regroupement (19,23,119) étant portés par des parois (18,1,18.2) du boîtier perpendiculaires à la direction de déplacement (X) et ayant une section en dents de scie selon un plan parallèle au plan de déplacement, la distance séparant les matrices (4) étant égale à la distance séparant les fonds (25) des dents, le distributeur étant disposé sur la table (2) de manière à ce que lors de son déplacement, chaque fond (25) entre deux dents recouvre une matrice (4) de la table.

2. Dispositif selon la revendication précédente, dans laquelle la rangée (R1, R2) de matrices est perpendiculaire à la direction de déplacement (X).

3. Dispositif de fabrication de pastilles selon la revendication 1 ou 2, comportant des moyens de regroupement aval (19) et des moyens de regroupement amont (23) selon la direction X, lesdits moyens de regroupement aval (19) étant décalés transversalement par rapport aux moyens de regroupement amont (23) d'une demi largeur de dent, de manière à ce qu'une pointe (21) de dent soit en regard d'un fond (25) entre deux dents consécutives.

4. Dispositif de fabrication de pastilles selon l'une des revendications 1 à 3, dans lequel le distributeur comporte des moyens de guidage longitudinaux (33) coopérant avec des moyens de guidage portés par la table, lesdits moyens de guidage (33) du distributeur comportant une saillie axiale (34) de chaque côté (18.3, 18.4) transversal du boîtier, glissant dans une rainure axiale (36) fixe par rapport à la table, la saillie axiale (34) étant orientée vers le boîtier, au moins une des saillies (34) est amovible.

5. Dispositif de fabrication de pastilles selon l'une quelconque des revendications précédentes, dans lequel le distributeur est raccordé aux moyens de déplacement (12) par l'intermédiaire de deux bras fixés (38) par une première extrémité (39) en rotation respectivement sur chacune des faces (18.3,18.4) du boîtier parallèles à la direction de déplacement (X), et mobiles en rotation par une deuxième extrémité opposée à la première extrémité, lesdits bras comportant chacun un vérin.

6. Dispositif de fabrication de pastilles selon l'une quelconque des revendications précédentes, dans lequel les moyens de regroupement (119) sont portés, respectivement, par une plaque mobile par rapport au boîtier.

7. Dispositif de fabrication de pastilles selon la revendication précédente, dans lequel le distributeur comporte des moyens d'excitation aptes à faire vibrer lesdites plaques par rapport aux matrices (4) le long de la direction de déplacement.

8. Dispositif de fabrication de pastilles selon la revendication précédente, dans lequel les moyens d'excitation comportent un arbre solidaire (112) par une extrémité (104) à la plaque et par une deuxième extrémité à un moyen d'actionnement selon un mouvement de va et vient le long de la direction de déplacement (X) et des moyens de suspension (110).

9. Dispositif de fabrication de pastilles selon la revendication précédente, dans lequel les moyens de suspension (110) comportent au moins un ressort (112) en réaction sur l'arbre et le boîtier, ou sont formés par un anneau en élastomère interposé entre la plaque et la paroi du boîtier en regard et forment également le moyen d'étanchéité.

10. Dispositif de fabrication selon la revendication 8 ou 9, dans lequel les moyens d'excitation comportent un pot vibrant ou du type piézoélectrique.

11. Dispositif de fabrication de pastilles selon l'une quelconque des revendications précédentes, dans lequel le distributeur comporte une face formant poussoir (40) en forme de nez glissant sur le plan de glissement destinée à pousser les pastilles après leur pressage.

12. Dispositif selon l'une des revendications précédentes, comportant deux rangées (R1,R2) de matrices (4) parallèles, les matrices (4) de chaque rangée (R1,R2) étant à équidistances les unes des autres, et les matrices (4) de la première rangée (R1) étant décalées par rapport aux matrices (4) de la deuxième rangée (R2) d'une demi-distance séparant les matrices (4) de la deuxième rangée (R2).

13. Dispositif selon l'une des revendications précédentes, dans lequel = ledit tuyau d'alimentation (10) s'étend dans la direction des rangées (R1, R2) de matrices (4).

14. Dispositif l'une des revendications précédentes, comportant un moyen de collecte du contenu du distributeur après un cycle de remplissage des matrices, ledit moyen de collecte comportant au moins un orifice pratiqué dans la table, raccordé par un tuyau à des moyens d'aspiration, l'orifice se trouvant sous le distributeur lorsque celui-ci est dans une position particulière de vidange, le moyen de collecte transférant la poudre collectée dans la trémie.

15. Dispositif selon l'une des revendications précédentes, dans lequel la table (2) est mobile selon un axe (Z) perpendiculaire à sa face plane.

16. Procédé de fabrication de pastilles avec le dispositif de fabrication selon l'une des revendications précédentes, comportant les étapes suivantes :
- remplissage de matrices avec la poudre au moyen du distributeur de poudre muni des moyens de regroupement le long de directions axiales distinctes correspondant à la disposition des matrices,
- pressage de la poudre dans les matrices,
- évacuation des pastilles.

17. Procédé selon la revendication précédente, dans lequel, pendant l'étape de remplissage, le distributeur a un mouvement de va et vient suivant une loi sinusoïdale ou une loi triangulaire.

18. Procédé selon la revendication 16 ou 17, dans lequel lors du pressage, les poinçons supérieurs sont déplacés suivant plusieurs vitesses.

19. Procédé selon l'une des revendications 16 à 18, dans lequel les moyens de regroupement sont mis en vibration.

## Patentansprüche

1. Vorrichtung zum Herstellen von Pellets, enthaltend einen Tisch (2), der mit einer Mehrzahl von Pressmatrizen (4) im Wesentlichen mit den Abmessungen der herzustellenden Pellets versehen ist, wobei die Matrizen (4) entlang zumindest einer Reihe (R1, R2) angeordnet sind, sowie untere Stempel, die dazu bestimmt sind, das Pulver in den Matrizen zu pressen, einen Pulverspender mit einem Gehäuse, das an einer oberen Wand (16) mit Anschlusseinrichtungen zum Anschließen an zumindest ein Pulverversorgungsrohr (10) versehen ist, das mit einem Trichter verbunden ist, wobei das Pulverversorgungsrohr (10) Zuführeinrichtungen (10) zum Zuführen von Pulver in den Spender ist, Verlagerungseinrichtungen zum Verlagern des Spenders auf dem Tisch **dadurch gekennzeichnet, dass** die Vorrichtung ebenfalls obere Stempel, die dazu bestimmt sind, das Pulver in den Matrizen zu pressen enthalte, dass Verlagerungseinrichtungen zum Verlagern des Spenders auf dem Tisch auf den Spender einer Hin- und Herbewegung entlang einer ersten Verlagerungsrichtung (X) richten, dass der Spender dazu geeignet ist, das Pulver in einer Hin- und Herbewegung auf einer Ebene des Tisches entlang der bestimmten Verlagerungsrichtung (X) zu beaufschlagen, und dass die Vorrichtung ebenfalls Zusammenführung Einrichtungen (19, 23, 119) zum Zusammenführen von Pulver entlang von verschiedenen Achsen, die im Wesentlichen parallel zur Verlagerungsrichtung (X) verlaufen, um die Mehrzahl an Pelletpressmatrizen (4) gleichzeitig zu befüllen enthalte, wobei die Vorrichtung **dadurch gekennzeichnet ist, dass** jede Matrize auf einer Zusammenführachse angeordnet ist, wobei die Zusammenführeinrichtungen (19, 23, 119) von senkrecht zur Verlagerungsrichtung (X) verlaufenden Wänden (18.1, 18.2) des Gehäuses abgestützt werden und einen sägezahnförmigen Querschnitt entlang einer Ebene parallel zur Verlagerungsebene haben, wobei der die Matrizen (4) trennende Abstand gleich dem Abstand ist, der die Zahngründe (25) trennt, wobei der Spender auf dem Tisch (2) so angeordnet ist, dass bei seiner Verlagerung jeder Zahngrund (25) zwischen zwei Zähnen eine Matrize (4) des Tisches überdeckt.

2. Vorrichtung nach dem vorangehenden Anspruch, wobei die Reihe (R1, R2) von Matrizen senkrecht zur Verlagerungsrichtung (X) verläuft.

3. Vorrichtung zum Herstellen von Pellets nach Anspruch 1 oder 2, enthaltend in Richtung X nachgelagerte Zusammenführeinrichtungen (19) und vorgelagerte Zusammenführeinrichtungen (23), wobei die nachgelagerten Zusammenführeinrichtungen (19) quer zu den vorgelagerten Zusammenführeinrichtungen (23) um eine halbe Zahnbreite versetzt sind, so dass eine Zahnspitze (21) einem Zahngrund (25) zwischen zwei aufeinanderfolgenden Zähnen gengenüberliegt.

4. Vorrichtung zum Herstellen von Pellets nach einem der Ansprüche 1 bis 3, wobei der Spender Längsführungseinrichtungen (33) enthält, die mit den von dem Tisch abgestützten Führungseinrichtungen zusammenwirken, wobei die Führungseinrichtungen (33) des Spenders einen axialen Vorsprung (34) auf jeder quer verlaufenden Seite (18.3, 18.4) des Gehäuses enthalten, die in einer bezüglich des Tisches festen, axialen Nut (36) gleiten, wobei der axiale Vorsprung (34) zum Gehäuse gerichtet ist und zumindest einer der Vorsprünge (34) abnehmbar ist.

5. Vorrichtung zum Herstellen von Pellets nach einem der vorangehenden Ansprüche, wobei der Spender mit den Verlagerungseinrichtungen (12) verbunden ist, und zwar über zwei Arme (38), die jeweils mit einem ersten Ende (39) an jede der parallel zur Verlagerungsrichtung (X) verlaufenden Seiten (18.3, 18.4) des Gehäuses drehbefestigt sind und mit einem zweiten Ende drehbeweglich sind, das dem ersten Ende entgegengesetzt ist, wobei die Arme jeweils einen Kraftzylinder enthalten.

6. Vorrichtung zum Herstellen von Pellets nach einem der vorangehenden Ansprüche, wobei die Zusammenführeinrichtungen (119) jeweils von einer bezüglich des Gehäuses beweglichen Platte abgestützt werden.

7. Vorrichtung zum Herstellen von Pellets nach dem vorangehenden Anspruch, wobei der Spender Anregungseinrichtungen enthält, die dazu geeignet sind, die Platten bezüglich der Matrizen (4) entlang der Verlagerungsrichtung vibrieren zu lassen.

8. Vorrichtung zum Herstellen von Pellets nach dem vorangehenden Anspruch, wobei die Anregungseinrichtungen eine Welle (112) enthalten, die mit einem Ende (104) fest mit der Platte verbunden ist und mit einem zweiten Ende fest mit einer Betätigungseinrichtung zum Betätigen in einer Hin- und Herbewegung entlang der der Verlagerungsrichtung (X) verbunden ist, sowie Aufhängungseinrichtungen (110).

9. Vorrichtung zum Herstellen von Pellets nach dem vorangehenden Anspruch, wobei die Aufhängungseinrichtungen (110) zumindest eine auf die Welle und das Gehäuse ansprechende Feder (112) enthalten oder aus einem Elastomerring ausgebildet sind, der zwischen der Platte und der gegenüberliegenden Gehäusewand eingesetzt ist, und auch die Dichtungseinrichtung bilden.

10. Vorrichtung zum Herstellen von Pellets nach Anspruch 8 oder 9, wobei die Anregungseinrichtungen einen schwingungserregenden ausgeführten Napf enthalten oder von piezoelektrisch-type ist.

11. Vorrichtung zum Herstellen von Pellets nach einem der vorangehenden Ansprüche, wobei der Spender eine nasenförmige Stößelfläche (40) aufweist, die auf der Gleitebene gleitet und dazu bestimmt ist, die Pellets nach deren Pressen wegzuschieben.

12. Vorrichtung nach einem der vorangehenden Ansprüche, enthaltend zwei Reihen (R1, R2) von parallelen Matrizen (4), wobei die Matrizen (4) einer jeden Reihe (R1, R2) in gleichem Abstand voneinander vorgesehen sind und die Matrizen (4) der ersten Reihe (R1) zu den Matrizen (4) der zweiten Reihe (R2) um einen halben Abstand versetzt sind, welcher die Matrizen (4) der zweiten Reihe (R2) trennt.

13. Vorrichtung zum Herstellen von Pellets nach einem der vorangehenden Ansprüche, wobei das Versorgungsrohr (10) sich in der Richtung der Reihen (R1, R2) von Matrizen (4) erstreckt.

14. Vorrichtung nach einem der vorangehenden Ansprüche, enthaltend eine Sammeleinrichtung zum Sammeln des Inhalts des Spenders nach einem Befüllzyklus zum Befüllen der Matrizen, wobei die Sammeleinrichtung zumindest eine in dem Tisch ausgeführte Öffnung aufweist, die über ein Rohr mit Saugeinrichtungen verbunden ist, wobei die Öffnung sich unter dem Spender dann befindet, wenn dieser in einer bestimmten Entleerungsposition ist, wobei die Sammeleinrichtung das gesammelte Pulver in den Trichter leitet.

15. Vorrichtung nach einem der vorangehenden Ansprüche, wobei der Tisch (2) entlang einer Achse (Z) senkrecht zur seiner ebenen Seite beweglich ist.

16. Verfahren zum Herstellen von Pellets mit der Herstellungsvorrichtung nach einem der vorangehenden Ansprüche, umfassend die nachfolgenden Schritte:
- Befüllen der Matrizen mit dem Pulver mittels des Pulverspenders, der mit Zusammenführeinrichtungen entlang verschiedener axialer Richtungen versehen ist, die der Anordnung von Matrizen entsprechen,
- Pressen des Pulvers in den Matrizen,
- Abführen der Pellets.

17. Verfahren nach dem vorangehenden Anspruch, wobei während des Füllschritts der Spender eine Hin- und Herbewegung nach einer Sinusfunktion bzw. Dreiecksfunktion ausführt.

18. Verfahren nach Anspruch 16 oder 17, wobei beim Pressen die oberen Stempel mit mehreren Geschwindigkeiten verlagert werden.

19. Verfahren nach einem der Ansprüche 16 bis 18, wobei die Zusammenführeinrichtungen in Schwingung versetzt werden.

## Claims

1. A device for making pellets including a table (2) provided with a plurality of pressing dies (4), substantially with the dimensions of the pellets to be made, the dies (4) being positioned according to at least one row (R1,R2), and lower punches intended to press, the powder in the dies, a powder dispenser including a casing provided on an upper wall (16) of means for connecting to at least one powder feed pipe (10) connected to a hopper, said powder feed pipe forming means for conveying powder into the dispenser, means for displacing the dispenser on the table, **characterized in that** the device also comprises upper punches intended to press the powder in the dies, **in that** the means for displacing the dispenser on the table apply to the dispenser a reciprocal movement along a first displacement direction (X), **in that** said dispenser is suitable to impulse the powder in a reciprocal movement on a plane of the table along the determined displacement direction (X), and **in that** said device also comprises means (19,23,119) for grouping the powder along distinct axes substantially parallel to the displacement direction (X), in order to simultaneously fill the plurality of pressing dies (4) with pellets, each die being positioned on a grouping axis, the grouping means (19,23,119) being borne by walls (18.1,18.2) of the casing perpendicular to the displacement direction (X) and with a sawtooth section along a plane parallel to the displacement plane, the distance separating the dies (4) being equal to the distance separating the bottom parts (25) of the teeth, the dispenser being positioned on the table (2) so that during its displacement, each bottom part (25) between two teeth, covers a die (4) of the table.

2. The device according to the preceding claim, wherein the row (R1,R2) of dies is perpendicular to the displacement direction (X).

3. The device for making pellets according to claim 1 or 2, including downstream grouping means (19) and upstream grouping means (23) along the X direction, said downstream grouping means (19) being shifted transversely relatively to the upstream grouping means (23) by a tooth half-width, so that a tooth tip (21) is facing a bottom part (25) between two consecutive teeth.

4. The device for making pellets according to any of claims 1 to 3, wherein the dispenser includes longitudinal guide means (33) cooperating with guide means borne by the table, said guide means (33) including an axial protrusion (34) on each transverse side (18.3,18.4), sliding in an axial groove (36) fixed relatively to the table, said axial protrusion (34) being directed towards the casing, at least one of the protrusions (34) being removable.

5. The device for making pellets according to any of the preceding claims, wherein the distributor is connected to displacement means (12) via two rotationally fixed arms (38) through a first end (39) on each of the faces (18.3,18.4) of the casing, parallel to the displacement direction (X), respectively, and rotationally mobile through a second end opposite to the first end, said arms each including a cylinder.

6. The device for making pellets according to any of the preceding claims, wherein the grouping means (119) are respectively borne by a mobile plate relatively to the casing.

7. The device according to the preceding claim, wherein the dispenser includes excitation means capable of causing said plates to vibrate relatively to the dies (4) along the displacement direction.

8. The device for making pellets according to the preceding claim, wherein the excitation means include a shaft (112) firmly attached through an end (104) to the plate and through a second end to a means for actuating a reciprocal movement along the displacement direction (X) and suspension means (110).

9. The device for making pellets according to the preceding claim, wherein the suspension means (110) include at least one spring (112) pressed between the shaft and the casing, or are formed by an elastomeric ring interposed between the plate and the wall of the casing facing each other and also forming the sealing means.

10. The making device according to claims 8 or 9, wherein the excitation means include a vibrator or of the piezoelectric type.

11. The device for making pellets according to any of the preceding claims, wherein the dispenser includes a face forming a pusher (40) having the shape of a nose sliding on the slide plane intended for pushing the pellets after their having been pressed.

12. The device for making pellets according to any of the preceding claims, including two parallel rows (R1,R2) of dies (4), the dies (4) of each row (R1,R2) being equidistant from each other, and the dies (4) of the first row (R1) being shifted relatively to the dies (4) of the second row (R2) by half of the distance separating the dies (4) of the second row (R2).

13. The device for making pellets according to any of the preceding claims, wherein said feed pipe (10) extends in the direction of the rows (R1,R2) of dies (4).

14. The device for making pellets according to any of the preceding claims, including a means for collecting the contents of the dispenser after a cycle for filling the dies, said collecting means including at least one orifice provided in the table, connected through a pipe to suction means, the orifice being under the dispenser when the latter is in a particular emptying position, the collecting means transferring the collected powder into the hopper.

15. The device for making pellets according to any of the preceding claims, wherein the table (2) is mobile along an axis (Z) perpendicular to its planar face.

16. A method for making pellets, with the making device according to any of the preceding claims, including the following steps:
- filling dies with powder by means of the powder dispenser provided with grouping means along distinct axial directions corresponding to the arrangement of the dies,
- pressing the powder in the dies,
- evacuating the pellets.

17. The method according to the preceding claim, wherein, during the filling step, the dispenser has a reciprocal movement according to a sinusoidal law or a triangular law.

18. The method according to claim 16 or 17, wherein, during the pressing, the upper punches are displaced according to several velocities.

19. The method according to any of claims 16 to 18, wherein the grouping means are set into vibration.
